# EUROPEAN PATENT SPECIFICATION

(11) **EP 1 295 065 B1**
(45) Date of publication and mention of the grant of the patent: **15.12.2004**
(21) Application number: 01957910.1
(22) Date of filing: 02.07.2001
(51) Int. Cl.: F17C 13/04, F16K 15/14

(54) **A DEVICE FOR PROTECTING AN OPEN GAS CHANNEL**
SCHUTZEINRICHTUNG FÜR EINEN OFFENEN GASKANAL
DISPOSITIF SERVANT A PROTEGER UNE CONDUITE DE GAZ OUVERTE

(30) Priority: 30.06.2000 LU 90609
(43) Date of publication of application: 26.03.2003
(73) Proprietor: LUXEMBOURG PATENT COMPANY S.A., 1720 Luxembourg (LU)
(72) Inventor: KREMER, Paul, L-7236 Walferdange (LU); HAECK, Claude, L-4480 Belvaux (LU)
(74) Representative: Schmitt, Armand
(86) International application number: PCT/EP2001/007554
(87) International publication number: WO 2002/001109

(56) References cited:
- EP-A- 0 271 358
- DE-A- 3 734 050
- US-A- 2 912 999
- US-A- 3 356 104
- US-A- 4 632 151

## Description

### Field of the invention

The present invention relates to a device for protecting an open gas channel, in particular the outlet channel of a gas cylinder valve, against penetration of solid particles, corrosive gases and humidity from the outside.

### Background of the invention

In order to prevent corrosion in the cylinder valve and to warrant absolute cleanliness of a gas distribution system, it is of utmost importance to prevent solid particles, corrosive gases and humidity from penetrating into the outlet channel of the valve. Most gas cylinder valves are therefore provided with a cap to be screwed on the outlet connection whenever the latter is not connected to a connecting conduit. Experience however shows that it is very often forgotten to screw this cap onto the outlet connection when the valve is disconnected from the connecting conduit.

In order to provide an optimum protection of the outlet channel of a gas cylinder valve, at least from the filling of the gas cylinder until its first connection to a gas distribution system, it is known to seal the outlet connection of gas cylinder valves with a sealing plug immediately after filling the gas cylinder This sealing plug must however be removed or pierced prior to connecting the outlet connection of the valve to a connecting conduit.

It is also known to include into the outlet connection of the valve a residual pressure device. Such a residual pressure device is a small check valve with a closure spring. It requires a residual pressure in the gas cylinder to overcome the closure force of the spring and open the check valve. Furthermore, if the gas cylinder is to be filled through the outlet connection of the valve, the residual pressure device must also include a locking device for maintaining the check valve in the open position during the filling operation. It follows that known residual pressure devices are rather complicated and cumbersome devices, which make the valve more expensive and less compact, in particular if they are to be integrated into the outlet channel of the valve. It will also be noted that the downstream part of the residual pressure device, which normally includes the closure spring, is nevertheless exposed to pollutants and corrosion when the outlet connection of the valve is disconnected from the connecting conduit. Last but not least, it is more or less impossible to retrofit existing cylinder valves with a residual pressure device in their outlet channel.

Non-return or check valves without closing springs are e.g. disclosed in EP-A-0271358, US-A-3,356,104 or US-A-2,912,999.

EP-A-0271358 describes a non-return valve to be mounted between two tubes. It includes a tubular valve housing provided with a tube coupling at each of its ends and enclosing a valve member. This valve member is a resilient frusto-conical member made from a silicone rubber or from polyurethane plastics. It is supported on a central spigot in a throughway of the valve housing and formed so that its resilience holds its outer periphery in sealing engagement with a cylindrical wall of the throughway. A fluid pressure acting in the opening direction resiliently deforms the frusto-conical member so as to space its outer periphery from the cylindrical wall and enable gas flow therebetween. A fluid pressure acting in the closing direction resiliently deforms the frusto-conical member so as to increase contact pressure between its outer periphery and the cylindrical wall of the throughway. The tubular valve body includes a male body half screwed into a female body half. The central spigot supporting the resilient frusto-conical member is formed by the front end of the male body half.

US-A-3,356,104 discloses a check valve with a piston type closing body in which a resilient seal lip acts as a piston seal when a gas pressure acts in the closing direction to push the closing body on its seat. A gas pressure acting in the opening direction resiliently deforms the seal lip so as to enable a fluid flow axially along the closing body.

US-A-2,912,999 describes a fluid check valve for a generally cylindrical conduit. This check valve includes a conically shaped member having an outer edge that engages a cylindrical wall of a bore in the female coupling member,
wherein the apex of the conical member is directed towards the normal direction of flow. In a first embodiment, the conical member is positioned and maintained in place within a pipe coupling by means of an annular ring, which is connected to the apex of the conical member by means of radially extending ribs. This annular ring is pressed against a shoulder in the female coupling member when the male coupling member is screwed therein. The conical member and the annular ring are formed of rubber and may be integrally molded as a single unit. In an alternative embodiment two conical members are formed on a common tubular stem. The conduit includes a supporting ring spider in which an axially extending rod is held in position. The common tubular stem of the two conical members is placed on this rod.

### Object of the invention

A technical problem underlying the present invention is to provide a simple device that can be easily mounted into any open gas channel, in particular into the outlet channel of a gas cylinder valve as a safer alternative to a sealing plug, to efficiently protect this channel against penetration of solid particles, corrosive gases and humidity from the outside. This problem is solved by a device as claimed in claim 1.

### Summary of the invention

A protection device in accordance with the present invention comprises a central core to be fitted in the open gas channel to be protected against penetration of solid particles, corrosive gases and humidity from the outside. This central core has a first core section that defines with a cylindrical wall of the gas channel an annular passage for a gas. An annular flexible seal lip extends from this first core section towards an annular outer edge. This seal lip is resiliently deformed and pressed against the cylindrical wall when the protection device is axially inserted into the open channel. If gas pressure acts in a first direction on the seal lip it resiliently deforms the latter so as to space its annular outer edge from the cylindrical wall and enable gas flow through the annular passage. In accordance with an important aspect of the present invention, the central core has a plug like second core section that is designed to be mounted like a plug directly into the open gas channel to centrally position and axially fix the central core therein. The plug like second core section includes at least one passage for the gas, which is in communication with the annular passage when the device is mounted in the open gas channel.

It will be appreciated that this very simple protection device can be directly and easily mounted into an open gas channel with matching dimensions, wherein the seal lip can be arranged very close to the opening of the channel. Thus, it can e.g. be advantageously used instead of a sealing plug to protect the open outlet channel of a gas cylinder valve against penetration of solid particles, corrosive gases and humidity from the outside. In this case the seal lip is designed so that gas pressure acting in the outlet direction on the seal lip resiliently deforms the latter so as to space its annular outer edge from the cylindrical wall and enable gas flow through the annular passage (i.e. said "first direction" corresponds to the "outlet direction"). Once in place in the outlet channel of the valve, the protection device efficiently protects the valve against penetration of solid particles, corrosive gases and humidity from the outside. In contrast to a sealing plug, there is no need to remove the protection device prior to connecting the outlet connection of the valve to a connecting conduit, because it does not prevent gas flow through the outlet channel in the outlet direction. Therefore, the protection device continues to efficiently protect the outlet channel when the outlet connection of the valve is again disconnected from its connecting conduit. A protection device in accordance with the present invention even provides the function of a simple residual pressure device in the gas cylinder valve, because a minimum gas cylinder pressure must act on the seal lip to space its annular outer edge from the cylindrical wall and enable gas flow through the annular passage. As a protection device in accordance with the present invention is basically very simple and inexpensive, it may be considered as a throw-away article, which is replaced each time the gas cylinder is returned to a filling station. Thus it is possible to warrant a long service life for the valve and high cleanliness of the outlet channel. Due to its plug like second core section, which is advantageously designed as a screw-in plug or as an expansion plug, the device can be easily centrally positioned and axially fixed in the gas channel.

If the plug like second core section is designed as an expansion plug the device of the present invention can be easily retrofitted in any open gas channel, without having to provide this gas channel with an internal thread. Thus the device of the present invention is e.g. the ideal solution for retrofitting existing gas cylinder valves at very low costs with an optimum protection of their outlet channel.

It will be noted that a protection device in accordance with the present invention can also be used to protect an open inlet channel against penetration of solid particles, corrosive gases and humidity from the outside. In this case the seal lip is designed so that gas pressure acting in the inlet direction on the seal lip resiliently deforms the latter so as to space its annular outer edge from the cylindrical wall and enable gas flow through the annular passage (i.e. said "first direction" corresponds to the "inlet direction").

A protection device in accordance with the present invention can be produced at very low costs by making the central core and the annular flexible seal in one piece from a chemically stable synthetic material, as e.g. polyethylene. Such an entirely synthetic protection device is inter alia an inexpensive but excellent corrosion protection measure for valves mounted on gas cylinders which contain highly corrosive gases. It is to be expected that it will considerably prolong the service life of corrosive gas cylinder valves.

In order to enable gas pressure acting in the first direction to open the seal lip, the latter is for example designed so that it makes at its annular outer edge an acute angle with the cylindrical wall when viewed in said first direction. Experience has shown that excellent sealing conditions are obtained if the seal lip is designed so as to have a convex surface when viewed in said first direction.

In order to provide a definite nonreturn function to the protection device, the seal lip is designed so that gas pressure acting on the seal lip in the opposite direction of said first direction, resiliently deforms the seal lip so as to increase contact pressure between its outer edge and the cylindrical wall. This may for example be achieved by designing the seal lip so that it makes at its annular outer edge an obtuse angle with the cylindrical wall when viewed in the opposite direction of said first direction. In a preferred embodiment of the protection device, this seal lip is then designed to define a concave surface when viewed in the opposite direction of said first direction.

The plug like second core section has advantageously a central body, which has a cross-section that is smaller than the cross-section of the of the gas channel wherein it is to be fitted. Longitudinal ribs are provided on this central body and designed for engaging the wall of the gas channel and centering the central body in the gas channel. The clearance zones between the ribs have the function of gas passages through the plug like second core section.

If the protection device has to be designed for warranting a high residual pressure in the gas cylinder, the plug like second core section is advantageously provided with at least one transverse rib for snapping behind a shoulder in the gas channel, when the device is fitted therein.

If the open channel to be protected comprises a stepped bore, consisting of a first bore step and a second bore step with a bigger cross-section than the first bore step, it is of advantage to provide the central core with a plug like second core section that is capable of being fitted in the first bore step, so that the first core section is located in the second bore step and the seal lip engages a cylindrical wall in the second bore step.

### Brief description of the drawings

The present invention will now be described, by way of example, with reference to the accompanying drawings, in which:
- Fig. 1:: is a three-dimensional view of a first embodiment of a device for protecting an outlet channel of a valve in accordance with the present invention;
- Fig. 2:: is a longitudinal section through an outlet connection of a valve, showing the device of Fig. 1 fitted therein;
- Fig. 3:: is a three-dimensional view of a second embodiment of a device for protecting an outlet channel of a valve in accordance with the present invention;
- Fig. 4:: is a longitudinal section through an outlet connection of a valve, showing the device of Fig. 3 fitted therein;
- Fig. 5:: is a three-dimensional view of a third embodiment of a device for protecting an outlet channel of a valve in accordance with the present invention;
- Fig. 6:: is a longitudinal section through an outlet connection of a valve, showing the device of Fig. 5 fitted therein;

### Detailed description of preferred embodiments

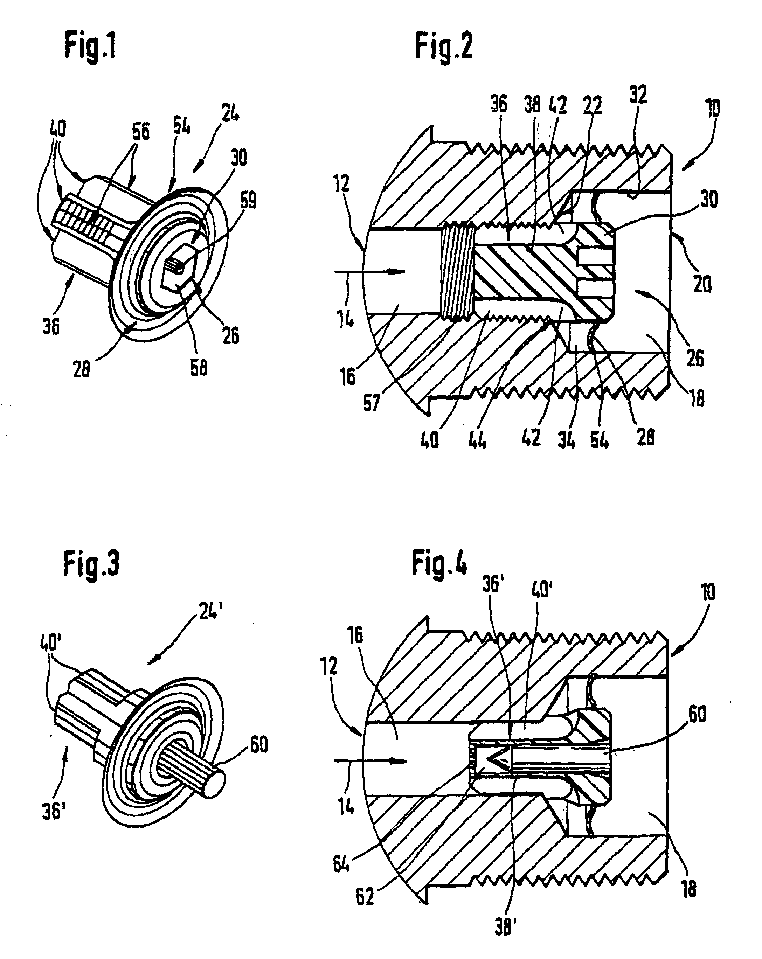

Fig. 2, 4 and 6 are longitudinal sections through an outlet connection 10 of a gas cylinder valve. This outlet connection 10 has an outlet channel 12 therein, wherein an arrow 14 indicates the outlet direction, i.e. the direction in which the gas from the gas cylinder streams through the outlet channel 12 when the valve is opened. It will be noted that the outlet channel 12 is a stepped bore, with an first bore step 16, which communicates with the upstream valve chamber wherein the closing member of the valve is arranged, and a second bore step 18 with an outlet opening in the end face 20 of the outlet connection 10. The diameter of the second bore step 18 is bigger than the diameter of the first bore step 16. A conical transition surface forms a shoulder 22 between the two bore steps 16 and 18.

Fig. 1 & 2 show a first embodiment of a device 24 for protecting the outlet channel 12 in accordance with the present invention against penetration of solid particles, corrosive gases and humidity from the outside. This protection device 24 mainly consists of a central core 26 and an annular flexible seal lip 28, which are made in one piece from a chemically stable synthetic material, as e.g. polyethylene. As seen on Fig. 2, in which the protection device 24 is shown in its operative position in the outlet channel 12, a first core section 30 centrally protrudes into the second bore step 18, wherein it defines with a cylindrical wall 32 an annular gas passage 34, whereas a plug like second core section 36 is fitted just like a plug directly into the first bore step 16 to centrally position and axially fix the central core 26 in the outlet channel 12. This plug like second core section 36 has a central body 38 with a cross-section that is smaller than the cross-section of the first bore step 16. Four longitudinal ribs 40 are provided on this central body 38 for engaging the wall of the first bore step 16 and centering and fixing the central core 26 in the outlet channel 12. The clearance zones between the ribs 40 are designed as gas passages 42 connecting the outlet channel 12 upstream the plug like second core section 36 to the annular passage 34 upstream of the seal lip 28 when the protecting device is in its operative position in the outlet channel 12. A shoulder surface 44 on the plug like second core section 36 sits on the shoulder surface 22 in the outlet channel 12, so as to define an axial end position of the protection device 24 in the outlet channel 12.

The annular flexible seal lip 28 extends from the first core section 30 towards an annular outer edge 54. As long as the protection device 24 is not fitted into the outlet channel 12, the diameter of this annular outer edge 54 of the seal lip 28 is slightly larger than the internal diameter of the second bore step 18. It follows that the seal lip 28 is resiliently deformed and firmly pressed against the cylindrical wall 32 of the second bore step 18 when the protection device 24 is fitted into the outlet channel 12. As can be seen on Fig. 2, the seal lip 28 is designed so that it has, when it is viewed in the annular passage 34 in the outlet direction 14, a convex surface and makes at its annular outer edge 54 an acute angle with the cylindrical wall 32. It follows that gas pressure acting in the outlet direction 14 on the seal lip 28 resiliently deforms the latter so as to space its annular outer edge 54 from the cylindrical wall 32 and partially free the annular passage 34 for gas flow. This gas pressure must of course be high enough to overcome the initial tension introduced into the seal lip 28 when the protection device 24 is fitted into the outlet channel 12. In other words, the initial tension introduced into the seal lip 28 when the latter is pressed into the second bore step 18 determines the residual pressure that must prevail upstream of the seal lip 28 to open the latter. This residual pressure can be adjusted by acting on the design parameters of the seal lip 28.

It will be noted that the seal lip 28 has, when it is viewed in the annular passage 34 in the opposite direction of the outlet direction 14, a concave surface and makes at its annular outer edge 54 an obtuse angle with the cylindrical wall 32. These features warrant a definite nonreturn function for the protection device 24. In other words, gas pressure acting on the seal lip 28 in the inlet direction, i.e. the opposite direction of the outlet direction 14, resiliently deforms the seal lip 28 so as to increase contact pressure between its outer edge 54 and the cylindrical wall 32. It follows that the protection device 24 is basically capable of preventing a back flow through the valve into the gas cylinder, if the gas pressure downstream of the valve is higher than the pressure in the gas cylinder.

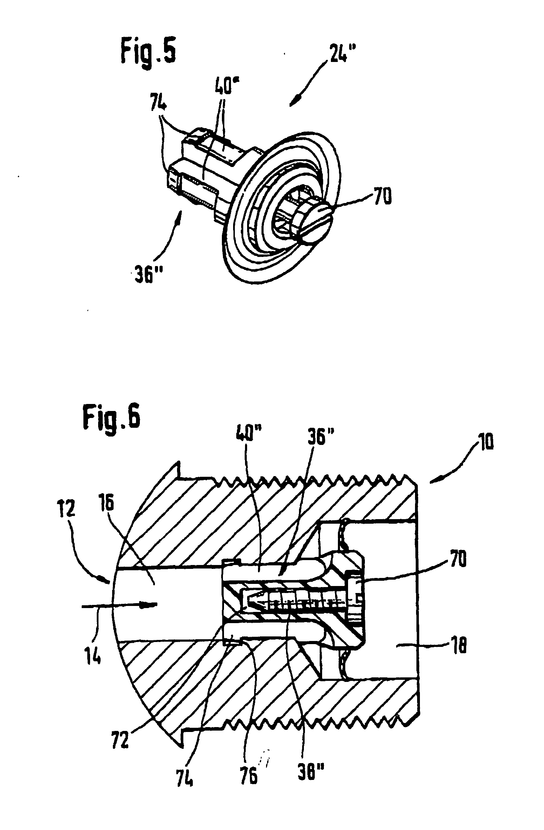

The above description also applies to the protection devices 24' shown in Fig. 3 & 4, respectively to the protection devices 24" shown in Fig. 5 & 6. Indeed, the protection devices 24, 24', 24" differ exclusively by the fixing means used to fix them in the outlet channel 12.

In the protection device 24 of Fig. 1 & 2, plug like second core section is designed as a screw-in plug (36). The ribs 40 are indeed provided with an external thread 56 that makes it possible to screw the second core section 36 just like a plug into an internal thread 57 in the first bore step 16. It will be noted that a hexagon socket 58 in the end face of the first core section 30 has a central pin 59 therein, so that a special key is required for unscrewing the protection device 24 from the outlet channel 12. This is to warrant that the protection device 24 cannot be too easily removed by a consumer.

The plug like second core section 36' of the protection devices 24' of Fig. 3 & 4 and the plug like second core section 36" of the protection devices 24" of Fig. 5 & 6 are each designed as an expansion plug to be radially expanded in the first bore step 16 in order to secure the protection device 24', 24" in the outlet channel 12.

In the protection device 24' of Fig. 3 & 4, the expansion plug is radially expanded by driving a pin 60 into a blind hole 62. The latter is arranged in a central body 38', which supports four longitudinal ribs 40' (which are the equivalents of longitudinal ribs 40 in the protection device 24). As the internal diameter of the blind bore 62 is smaller than the diameter of the pin 60, the longitudinal ribs 40' are radially pressed against the cylindrical wall of the first bore step 16 when the pin 60 is driven into the blind hole 62. In order to remove the protection device 24' from the outlet channel 12, the pin 60 should first be driven through the bottom surface 64 of the blind hole 62 into the first bore step 16. Then the protection device 24' can be easily removed with the help of a hook introduced into the blind hole 62, which is now open at its bottom end. This removal operation may be easily automated in a gas cylinder filling station.

In the protection device 24" of Fig. 5 & 6, the expansion plug is radially expanded by screwing a self-cutting screw 70 into a blind hole 72. The latter is arranged in a central body 38", which again supports four longitudinal ribs 40". As the cross section of the blind bore 72 is smaller than the cross section of the screw 70, the longitudinal ribs 40" are radially pressed against the cylindrical wall of the first bore step 16 when the screw 70 is screwed into the blind hole 72. Reference number 74 identifies transverse ribs snapping behind a shoulder 76 machined into the wall of the first bore step 16, when the protection device 24" is inserted into the outlet channel 12. These transverse ribs 74 warrant that the protection device 24" is better secured in the outlet channel 12 against expulsion.

## Claims

1. A gas outlet channel (12) with a protection device comprising:
a central core (26) axially inserted in said gas outlet channel (12), said central core (26) having.
a first core section (30), which defines with a cylindrical wall (32) in said gas channel (12) an annular passage (34) for a gas, and
a plug like second core section (36, 36', 36"), which is axially plugged into said gas outlet channel (12) wherein it engages a cylindrical wall defining said gas outlet channel (12) to centrally position and axially fix said central core (26) therein, said plug like second core section (36) including at least one passage (42) for said gas in communication with said annular passage (34); and
an annular flexible seal lip (28) extending from said first core section (30) towards an annular outer edge (54), wherein said seal lip (28) is designed so that it is resiliently deformed and pressed against said cylindrical wall (32) when said central core (26) is axially inserted into said open gas channel (12), so that it seals off said annular passage (34) until gas pressure acting in the outlet direction (14) on said seal lip (28) resiliently deforms said seal lip (28) to space its annular outer edge (54) from said cylindrical wall (32) and enable gas flow through said annular passage (34).

2. The gas outlet channel as claimed in claim 1, wherein said plug like second core section is a screw-in plug (36), which is screwed into a female thread in said cylindrical wall.

3. The gas outlet channel as claimed in claim 1, wherein said plug like second core section is an expansion plug (36', 36"), which is radially expanded within said gas channel (12).

4. The gas outlet channel as claimed in claim 3, wherein said expansion plug (36") is radially expanded by insertion of a screw (70).

5. The gas outlet channel as claimed in claim 3, wherein said expansion plug (36') is radially expanded by insertion of a pin (60).

6. The gas outlet channel as claimed in any one of claims 1 to 5, wherein said central core (26) and said seal lip (28) are made in one piece from a synthetic material.

7. The gas outlet channel as claimed in claim 6, wherein said synthetic material is polyethylene.

8. The gas outlet channel as claimed in any one of claims 1 to 7, wherein said seal lip (28) is designed so that it makes at its annular outer edge (54) an acute angle with said cylindrical wall (32) when viewed in the outlet direction (14).

9. The gas outlet channel as claimed in any one of claims 1 to 8, wherein said seal lip (28) is designed so as to have a convex surface when viewed in the outlet direction (14).

10. The gas outlet channel as claimed in any one of claims 1 to 9, wherein said seal lip (28) is furthermore designed so that gas pressure acting on said seal lip (28) in the opposite direction of the outlet direction (14) resiliently deforms said seal lip (28) so as to increase contact pressure between its outer edge (54) and said cylindrical wall (32).

11. The gas outlet channel as claimed in claim 1 0, wherein said seal lip (28) is designed so that it makes at its annular outer edge (54) an obtuse angle with said cylindrical wall (32) when viewed in the opposite direction of the outlet direction (14).

12. The gas outlet channel as claimed in claim 10 or 11, wherein said seal lip (28) is designed so as to define a concave surface when viewed in the opposite direction of the outlet direction (14).

13. The gas outlet channel as claimed in any one of claims 1 to 12, wherein said plug like second core section (36) has a central body (38, 38', 38") with a cross-section that is smaller than the cross-section of the gas channel (12) wherein it is to be plugged, said central body (38, 38', 38") having longitudinal ribs (40, 40', 40") thereon, which are designed for engaging said cylindrical wall of said gas outlet channel (12) to centrally position and axially fix said central body (38, 38', 38") therein.

14. The gas outlet channel as claimed in any one of claims 1 to 13, wherein said plug like second core section (36") includes at least one transverse rib (74), said transverse rib (74) being designed for snapping behind a shoulder (76) in said gas channel (12), when said device (24") is axially inserted into said outlet channel (12).

15. The gas outlet channel as claimed in any one of claims 1 to 14, wherein said gas channel (12) comprises a stepped bore, said stepped bore consisting of a first bore step (16) and a second bore step (18) with a bigger cross-section than said first bore step, wherein said device (24, 24', 24") is designed so that:
said plug like second core section (36) can be plugged directly into said first bore step (16), so that said first core section (30) is located in said second bore step (18), wherein said seal lip (28) engages a cylindrical wall (32) in said second bore step (18) and said plug like second core section (36) engages a cylindrical wall in said first bore step (16).

16. A gas cylinder valve including a gas outlet channel (12) with a protection device (24, 24', 24") as claimed in any one of the preceding claims.

## Patentansprüche

1. Gasauslasskanal (12) mit einer Schutzeinrichtung umfassend:
einen Mitteleinsatz (26), der axial in den Gasauslasskanal (12) eingesetzt ist, wobei der Mitteleinsatz (26) aufweist:
einen ersten Einsatzteil (30), der mit einer zylindrischen Wand (32) im Gaskanal (12) einen ringförmigen Durchlass (34) für ein Gas definiert, und
einen stopfenähnlichen zweiten Einsatzteil (36, 36', 36"), der axial in den Gasauslasskanal (12) eingesteckt ist, wobei er mit einer den Gasauslasskanal (12) definierenden zylindrischen Wand in Eingriff ist, um den Mitteleinsatz (26) darin mittig zu positionieren und axial zu fixieren, wobei der stopfenähnliche zweite Einsatzteil (36) mindestens einen Durchlass (42) für das Gas enthält, der in Verbindung mit dem ringförmigen Durchlass (34) steht; und
eine ringförmige, flexible Dichtlippe (28), die sich von dem ersten Einsatzteil (30) zu einem ringförmigen Außenrand (54) hin erstreckt, wobei die Dichtlippe (28) so ausgelegt ist, dass sie elastisch verformt und gegen die zylindrische Wand (32) gedrückt wird, wenn der Mitteleinsatz (26) axial in den offenen Gaskanal (12) eingesetzt ist, so dass sie den ringförmigen Durchlass (34) abdichtet, bis der in Auslassrichtung (14) auf die Dichtlippe (28) wirkende Gasdruck die Dichtlippe (28) elastisch verformt, um deren ringförmigen Außenrand (54) von der zylindrischen Wand (32) zu beabstanden und einen Gasstrom durch den ringförmigen Durchlass (34) zu ermöglichen.

2. Gasauslasskanal nach Anspruch 1, wobei der stopfenähnliche zweite Einsatzteil ein Schraubstopfen (36) ist, der in ein Innengewinde in der zylindrischen Wand eingeschraubt wird.

3. Gasauslasskanal nach Anspruch 1, wobei der stopfenähnliche zweite Einsatzteil ein Ausdehnungsstopfen (36', 36") ist, der radial im Gaskanal (12) ausgedehnt wird.

4. Gasauslasskanal nach Anspruch 3, wobei der Ausdehnungsstopfen (36") durch Einführen einer Schraube (70) radial ausgedehnt wird.

5. Gasauslasskanal nach Anspruch 3, wobei der Ausdehnungsstopfen (36') durch Einführen eines Stifts (60) radial ausgedehnt wird.

6. Gasauslasskanal nach irgendeinem der Ansprüche 1 bis 5, wobei der Mitteleinsatz (26) und die Dichtlippe (28) einstückig aus einem synthetischen Material gefertigt sind.

7. Gasauslasskanal nach Anspruch 6, wobei das synthetische Material Polyethylen ist.

8. Gasauslasskanal nach irgendeinem der Ansprüche 1 bis 7, wobei die Dichtlippe (28) so ausgelegt ist, dass sie in Auslassrichtung (14) gesehen an ihrem ringförmigen Außenrand (54) einen spitzen Winkel mit der zylindrischen Wand (32) bildet.

9. Gasauslasskanal nach irgendeinem der Ansprüche 1 bis 8, wobei die Dichtlippe (28) so ausgelegt ist, dass sie in Auslassrichtung (14) gesehen eine konvexe Oberfläche aufweist.

10. Gasauslasskanal nach irgendeinem der Ansprüche 1 bis 9, wobei die Dichtlippe (28) ferner so ausgelegt ist, dass Gasdruck, der in zur Auslassrichtung (14) entgegengesetzter Richtung auf die Dichtlippe (28) wirkt, die Dichtlippe (28) elastisch verformt, um so den Kontaktdruck zwischen deren Außenrand (54) und der zylindrischen Wand (32) zu vergrößern.

11. Gasauslasskanal nach Anspruch 10, wobei die Dichtlippe (28) so ausgelegt ist, dass sie in zur Auslassrichtung (14) entgegengesetzter Richtung gesehen an ihrem ringförmigen Außenrand (54) einen stumpfen Winkel mit der zylindrischen Wand (32) bildet.

12. Gasauslasskanal nach Anspruch 10 oder 11, wobei die Dichtlippe (28) so ausgelegt ist, dass sie in zur Auslassrichtung (14) entgegengesetzter Richtung gesehen eine konkave Oberfläche definiert.

13. Gasauslasskanal nach irgendeinem der Ansprüche 1 bis 12, wobei der stopfenähnliche zweite Einsatzteil (36) einen Mittelkörper (38, 38', 38") mit einem Querschnitt aufweist, der kleiner ist als der Querschnitt des Gaskanals (12), in den er einzustopfen ist, wobei der Mittelkörper (38, 38', 38") Längsrippen (40, 40', 40") aufweist, die für das Ineingriffbringen der zylindrischen Wand des Gasauslasskanals (12) ausgelegt sind, um den Mittelkörper (38, 38', 38") darin mittig zu positionieren und axial zu fixieren.

14. Gasauslasskanal nach irgendeinem der Ansprüche 1 bis 13, wobei der stopfenähnliche zweite Einsatzteil (36") mindestens eine Querrippe (74) enthält, wobei die Querrippe (74) für das Einschnappen hinter einem Absatz (76) im Gaskanal (12) ausgelegt ist, wenn die Einrichtung (24") axial in den Auslasskanal (12) eingeführt wird.

15. Gasauslasskanal nach irgendeinem der Ansprüche 1 bis 14, wobei der Gaskanal (12) eine abgestufte Bohrung umfasst, wobei die abgestufte Bohrung aus einer ersten Bohrungsstufe (16) und einer zweiten Bohrungsstufe (18) besteht, deren Querschnitt größer ist als der der ersten Bohrungsstufe, wobei die Einrichtung (24, 24', 24") so ausgelegt ist, dass:
der stopfenähnliche zweite Einsatzteil (36) direkt so in die erste Bohrungsstufe (16) eingesteckt werden kann, dass der erste Einsatzteil (30) in der zweiten Bohrungsstufe (18) positioniert wird, wobei die Dichtlippe (28)mit einer zylindrischen Wand (32) der zweiten Bohrungsstufe (18) in Eingriff ist und der stopfenähnliche zweite Einsatzteil (36) mit einer zylindrischen Wand der ersten Bohrungsstufe (16) in Eingriff ist.

16. Gaszylinderventil umfassend einen Gasauslasskanal (12) mit einer Schutzeinrichtung (24, 24', 24") nach irgendeinem der vorangehenden Ansprüche.

## Revendications

1. Conduit de sortie de gaz (12) avec un dispositif de protection comprenant :
un noyau central (26) inséré axialement dans ledit conduit de sortie de gaz (12), ledit noyau central (26) comprenant
une première section de noyau (30) qui définit avec une paroi cylindrique (32) dans ledit conduit de gaz (12) un passage annulaire (34) pour un gaz; et
une deuxième section de noyau en forme de bouchon (36, 36', 36"), qui est placée axialement dans ledit conduit de sortie de gaz (12), et y engage une paroi cylindrique définissant ledit conduit de sortie de gaz (12) pour y positionner centralement et fixer axialement ledit noyau central (26), ladite deuxième section de noyau en forme de bouchon (36) incluant au moins un passage (42) pour ledit gaz, pour en communication avec ledit passage annulaire (34); et
une lèvre de joint annulaire flexible (28) s'étendant de ladite première section de noyau (30) vers un bord annulaire extérieur (54), ladite lèvre de joint (28) étant conçue de telle sorte qu'elle est élastiquement déformée et appuyée contre ladite paroi cylindrique (32) lorsque ledit noyau central (26) est inséré axialement dans ledit conduit de sortie de gaz (12), ouvert, de sorte qu'elle obture de manière étanche ledit passage annulaire (34) jusqu'à ce que la pression du gaz agissant dans la direction de sortie (14) sur ladite lèvre de joint (28) déforme élastiquement ladite lèvre de joint (28) de manière à écarter son bord annulaire extérieur (54) de la dite paroi cylindrique (32) et permettre l'écoulement du gaz à travers ledit passage annulaire (34).

2. Conduit de sortie de gaz selon la revendication 1, dans lequel ladite deuxième section de noyau en forme de bouchon est un bouchon fileté (36) qui est vissé dans un filetage femelle dans ladite paroi cylindrique.

3. Conduit de sortie de gaz selon la revendication 1, dans lequel ladite deuxième section de noyau en forme de bouchon est un bouchon d'expansion (36', 36") qui se dilate radialement dans ledit conduit de gaz (12).

4. Conduit de sortie de gaz selon la revendication 3, dans lequel ledit bouchon d'expansion (36") se dilate radialement par insertion d'une vis (70).

5. Conduit de sortie de gaz selon la revendication 3, dans lequel ledit bouchon d'expansion (36') se dilate radialement par insertion d'une tige (60).

6. Conduit de sortie de gaz selon l'une quelconque des revendications 1 à 5, dans lequel ledit noyau central (26) et ladite lèvre de joint (28) sont faits d'une seule pièce à partir d'un matériau synthétique.

7. Conduit de sortie de gaz selon la revendication 6, dans lequel ledit matériau synthétique est du polyéthylène.

8. Conduit de sortie de gaz selon l'une quelconque des revendications 1 à 7, dans lequel ladite lèvre de joint (28) est conçue de telle sorte qu'elle forme à son bord annulaire extérieur (54) un angle aigu avec ladite paroi cylindrique (32) lorsque observé dans la direction de sortie (14).

9. Conduit de sortie de gaz selon l'une quelconque des revendications 1 à 8, dans lequel ladite lèvre de joint (28) est conçue de manière à avoir une surface convexe lorsque observé dans la direction de sortie (14).

10. Conduit de sortie de gaz selon l'une quelconque des revendications 1 à 9, dans lequel ladite lèvre de joint (28) est en outre conçue de telle sorte que la pression du gaz agissant sur ladite lèvre de joint (28) dans la direction opposée à la direction de sortie (14) déforme élastiquement ladite lèvre de joint (28) afin d'accroître la pression de contact entre son bord extérieur (54) et ladite paroi cylindrique (32).

11. Conduit de sortie de gaz selon la revendication 10, dans lequel ladite lèvre de joint (28) est conçue de telle sorte qu'elle forme à son bord annulaire extérieur (54) un angle obtus avec ladite paroi cylindrique (32) lorsque observé dans la direction opposée à la direction de sortie (14).

12. Conduit de sortie de gaz selon la revendication 10 ou 11, dans lequel ladite lèvre de joint (28) est conçue de manière à définir une surface concave lorsque observé dans la direction opposée à la direction de sortie (14).

13. Conduit de sortie de gaz selon l'une quelconque des revendications 1 à 12, dans lequel ladite deuxième section de noyau en forme de bouchon (36) a un corps central (38, 38', 38") ayant une section transversale qui est plus petite que la section transversale du conduit de gaz (12) dans laquelle elle est à placer, ledit corps central (38, 38', 38") portant des nervures longitudinales (40, 40', 40") qui sont destinées à engager ladite paroi cylindrique dudit conduit de sortie de gaz (12) pour y positionner centralement et fixer axialement ledit corps central (38, 38', 38").

14. Conduit de sortie de gaz selon l'une quelconque des revendications 1 à 13, dans lequel ladite deuxième section de noyau en forme de bouchon (36") inclut au moins une nervure transversale (74), ladite nervure transversale (74) étant conçue pour s'accrocher derrière un épaulement (76) dans ledit conduit de gaz (12), lorsque ledit dispositif (24") est introduit axialement dans ledit conduit de sortie (12).

15. Conduit de sortie de gaz selon l'une quelconque des revendications 1 à 14, dans lequel ledit conduit de gaz (12) comprend une forure étagée, ladite forure étagée comprenant un premier étage de forure (16) et un deuxième étage de forure (18) avec une section transversale plus grande que ledit premier étage de forure, dans lequel ledit dispositif (24, 24', 24") est conçu de telle sorte que :
ladite deuxième section de noyau en forme de bouchon (36) peut être placée directement dans ledit premier étage de forure (16), de manière à ce que ladite première section de noyau (30) soit placée dans ledit deuxième étage de forure (18), dans lequel ladite lèvre de joint (28) engage une paroi cylindrique (32) dans ledit deuxième étage de forure (18) et ladite deuxième section de noyau en forme de bouchon (36) engage une paroi cylindrique dans ledit premier étage de forure (16).

16. Robinet pour récipient à gaz ayant un conduit de sortie de gaz (12) comportant un dispositif de protection (24, 24', 24") selon l'une quelconque des revendications précédentes.
